# EUROPÄISCHE PATENTSCHRIFT

(11) **EP 1 597 004 B1**
(45) Veröffentlichungstag und Bekanntmachung des Hinweises auf die Patenterteilung: **18.07.2007**
(21) Anmeldenummer: 04710745.3
(22) Anmeldetag: 13.02.2004
(51) Int. Cl.: B22F 3/11, B22F 1/00, C04B 38/06, C04B 38/00

(54) **VERFAHREN ZUM SCHÄUMEN VON SINTERFORMKÖRPERN MIT ZELLSTRUKTUR**
METHOD FOR FOAMING POWDER-MOLDED BODIES COMPRISING A CELLULAR STRUCTURE
PROCEDE DE MOUSSAGE DE CORPS FRITTES PRESENTANT UNE STRUCTURE CELLULAIRE

(30) Priorität: 20.02.2003 AT 200300101
(43) Veröffentlichungstag der Anmeldung: 23.11.2005
(73) Patentinhaber: PLANSEE SE, 6600 Reutte (AT)
(72) Erfinder: FÄRBER, Jörg, A-6600 Breitenwang (AT); JAECKEL, Manfred, 27612 Loxstedt (DE)
(86) Internationale Anmeldenummer: PCT/AT2004/000046
(87) Internationale Veröffentlichungsnummer: WO 2004/073908

(56) Entgegenhaltungen:
- EP-A- 0 300 543
- WO-A-20/04067476
- DE-C- 19 648 926
- US-A- 4 517 069
- US-A1- 2001 046 608
- PATENT ABSTRACTS OF JAPAN vol. 2000, no. 12, 3. Januar 2001 (2001-01-03) -& JP 2000 264753 A (TOSHIBA CERAMICS CO LTD), 26. September 2000 (2000-09-26)

## Beschreibung

Die Erfindung betrifft ein Verfahren zur Herstellung eines zellularen Sinterformkörpers mit den Fertigungsschritten, Auftragen einer Schicht aus einem, Keramik- u/o Metall-Matrixpulver und organische Komponenten enthaltenden Schichtmaterial auf treibmittelhaltige, vorgeschäumte Polystyrol-Teilchen, Nachschäumen der beschichteten Polystyrol-Teilchen in einer Formgebungsvorrichtung, Entfernen von Polystyrol und organischen Komponenten aus dem so gebildeten Formkörper und Sintern des Matrixpulvers.

Metallische u/o keramische Formkörper mit zellularer Struktur sind Festkörper mit einem sehr hohen Volumenanteil an Hohlräumen und mit vergleichsweise dünnen tragenden Zellwänden aus dem Matrixmaterial. Sie finden beispielsweise dort Verwendung, wo eine Material- oder Gewichtseinsparung im Formkörper von Bedeutung sind, oder wo die thermische Isolationswirkung der Hohlräume im Formkörper genutzt wird. Liegt zudem eine Offenporigkeit im Formkörpern vor, so eröffnet dies die Verwendung als mechanische Filter und Katalysatoren. Vorbedingung für eine erfolgreiche Anwendung ist die Bereitstellung eines wirtschaftlichen Verfahren zur Fertigung der Formkörper mit mechanisch tragfähigen Strukturen bei gleichzeitig hohem Porenvolumenanteil.

Die Verfahren der Pulvermetallurgie und Sintertechnologie erlauben es, sogenannte Platzhalterteilchen zum metallischen oder keramischen Formkörper-Matrixpulver zuzumischen, die Pulvermischungen zu Formkörpern zu verpressen und die Presslinge zu Sinterformkörpern mit Poren zu verarbeiten, indem die Platzhalter unter Hinterlassung einer Porenstruktur aus dem Festkörper herausgelöst werden.
Entsprechend der Bedeutung dieser Technologie und dem weiten Feld von möglichen Produktanwendungen besteht hierzu bereits ein umfangreiches Fachwissen.

So nennt die DE 177 15 26 A1 ein Gießverfahren zur Herstellung keramischer Massen mit Waben-, bzw. Porenstruktur, wobei dem Gießschlicker Kunststoffe in Perlenform als Platzhalter und Porenbildner eingerührt werden.
Bevorzugter Kunststoff ist vorgeschäumtes treibmittelhaltiges Polystyrol.

Mit der Pulver- und Sintertechnologie zur Fertigung poröser Körper eng verbunden ist die Entwicklung und Bereitstellung geeigneter Bindermaterialien. Viele Matrixpulver lassen sich nur mittels Zugabe von geeigneten Bindern zu press- und sinterfähigen Körpern verarbeiten, insbesondere dann, wenn Platzhalterteilchen als Porenbildner dem Matrixpulver in einem größeren Volumenanteil beigemischt sind. Die Entwicklung der MIM (metal injection molding) Technik brachte bezüglich geeigneter organischer und anorganischer Bindermaterialien große Fortschritte.

Die DE 196 48 926 C1 beschreibt einen aus nicht näher spezifizierten Matrixpulvern gefertigten Formkörper, bzw. Sinterformkörper, wobei die Formmasse neben dem Matrixpulver hochpolymeres Polyamid als wesentliches Bindermaterial enthält. Daneben enthält die Formmasse Wachs- und Weichmachergemische, die vornehmlich als Platzhalterteilchen für die angestrebte Porenbildung zugegeben sind und die nach der Formgebung beispielsweise mittels Aceton im Formkörper gelöst und aus diesem extrahiert werden. Der zumindest überwiegende Teil des Polyamid-Binders wird auf einer ersten Temperaturstufe im Zuge des Hochtemperatur Sinterprozesses mittels Pyrolyse aus dem noch wenig versinterten Formkörper entfernt.
In der Praxis hat sich dieses Verfahren für Sinterkörper mit hohem Porenvolumenanteil indes wenig bewährt. Der für größer 50 Vol.% benötigte hohe Binderanteil an der Formmasse erlaubt keine Dichtsinterung des Matrixpulvers zu mechanisch ausreichend festen Körpern. Es bilden sich keine mechanisch ausreichend feste Sinterbrücken zwischen einzelnen Matrixteilchen bis zu einem Zeitpunkt, zu dem die Binderfunktion des Polyamids infolge Pyrolyse verloren geht.

Ein anderes Verfahren mit dem Endziel mechanisch tragfähiger, hochporöser Sinterkörper ist in der EP 0 300 543 A1 beschrieben. Das Verfahren beschreibt die Herstellen von einzeln gebildeten metallischen oder keramischen Hohlkugeln, wobei diese wahlweise in einem nachfolgenden Verfahrensschritt zu einem Formkörper weiterverarbeitet werden können. Zur Fertigung der Hohlkugeln werden treibmittelhaltige, auf beispielsweise 4 mm Durchmesser vorgeschäumte, etwa kugelförmige Polystyrol-Teilchen in einer wässrigen Suspension bewegt, die gelöstes oder in Flüssigkeit suspendiertes Bindemittel, sowie als Suspension vorliegende metallische u/o keramische Matrix-Pulverteilchen enthält. Die so beschichteten und getrockneten Polystyrol-Teilchen werden einem Sinterprozess unterzogen. Dabei wird während der ersten Sinterphase bei 400°C - 550°C und unter Bewegung der beschichteten Teilchen das Styropor mittels Pyrolyse aus diesen extrahiert und die verbleibende Auftragsschicht bei Temperaturen von 1000°C -1500°C unter Bewegung zur Sinterhohlkugel weiterverarbeitet. Die Auswahl des Binders kann aus einer Vielzahl von Vertretern bekannter Gruppen an organischen Bindemitteln erfolgen, darunter neben Polyethylen, Polyacrylat, Polyvinylalkohol, Celluloseester, Phenolharz, Epoxyharz unter anderen auch Polyamid.
In den Beispielen ist ein Nachschäumen der beschichteten und in eine Formgebungsvorrichtung gefüllten Polystyrol-Teilchen noch vor dem zweistufigen Sinterprozess genannt. Dabei wird ein beispielsweise plattenförmiger Schaumkörper erhalten.
Nach diesem Verfahren gefertigte Hohlkugeln besitzen mangels ausreichend dichter Versinterung der mit der Auftragschicht aufgebrachter Matrixteilchen nur unbefriedigende mechanische Festigkeit. Es kommt regelmäßig zu großen Dichteschwankungen innerhalb der Auftragsschicht und je nach dem verwendeten Bindermittel mehr oder etwas weniger häufig zu einem Aufreißen und bereichsweisen Ablösen der Auftragsschicht von der Oberfläche des Polystyrol-Teilchens schon während des Beschichtungsvorganges. Die beschichteten Hohlkugeln lassen sich daher nicht zufriedenstellend weiterverarbeiten und sind für die Mehrzahl der im Grunde möglichen Anwendungszwecke nur sehr eingeschränkt verwendbar.
Das gilt in vergleichbarem Maße auch für aus den Hohlkugeln gefertigte Schaumkörper bzw. Sinterformkörper.

Aufgabe vorliegender Erfindung ist ein von der EP 0 300 543 A1 ausgehendes, die Beschichtung von vorgeschäumten Polystyrol-Teilchen einschließendes, verbessertes Verfahren zur Herstellung von mechanisch tragfähigen, zellularen Sinterformkörpern. Das bereitzustellende Verfahren soll insbesondere eine verbesserte Versinterung benachbarter Matrixteilchen aus der Auftragsschicht zu einem Sinterformkörper mit dichten membranartigen Zellwänden oder aber mit gezielt mikroporösen und gleichwohl tragfähigen Zellwänden ergeben. Die Ziel möglichst hoher mechanischer Festigkeit bei größtmöglichem Porenvolumenanteil im Sinterformkörper soll unterstützt werden durch die Ausformung einer wabenartigen Anordnung der einzelnen Zellen im Sinterformkörper als räumlich dichte Packung, frei von Lücken und Hohlräumen zwischen einzelnen Zellen.
Weiterhin soll das Verfahren neben Formkörpern mit geschlossener Zellstruktur die wahlweise Ausgestaltung von gezielten Durchbrüchen, bzw. Öffnungen in den Zellwänden im Sinterformkörper erlauben, dergestalt, dass ein offenporiger Sinterformkörper entsteht.

Diese Aufgabe wird für das eingangs genannte Verfahren erfindungsgemäß mittels der Merkmale der Patentansprüche gelöst.

Die Vorteile vorliegender Erfindung gemäß Aufgabenstellung resultieren aus der Verwendung von Polyamid als Binder und seine Aufbereitung in der Formmasse über eine Granulatbildung. In Verbindung mit den bereits bekannten und erprobten Verfahrensschritten der Schichtauftragung auf vorgeschäumte Polystyrol-Teilchen erlaubt dies ein Nachschäumen bei vergleichsweise niedrigen Temperaturen in einer geschlossenen, bzw. in zumindest in zwei Raumrichtungen durch die Formwände begrenzten Form bis zu einem Zustand, welcher durch die kennzeichnende Zellstrukturbildung im fertigen Sinterformkörper definiert ist.

Das Polyamid wird gemeinsam mit den weiteren Binderkomponenten, wie Weichmacher, Tenside, Fettsäuren und Gleitmittel, mit dem keramischen u/o metallischen Matrixpulver mechanisch gemischt und dann in einem Knetaggregat bei Temperaturen von 100° bis 120°C bis zum Erreichen der minimal erreichbaren Schmelzviskosität plastifiziert. Danach wird die so gebildete Formmasse abgekühlt, verfestigt und bis zu einer Teilchengröße von 0,01 - 5 mm, vorzugsweise 0,01 - 2 mm mechanisch zerkleinert, bzw. granuliert. Das Granulat wird im Weiteren beispielsweise über eine wässrige Suspension als haftfähige Schicht auf die Oberfläche der vorgeschäumten Polystyrol-Teilchen aufgebracht. Nach einem alternativen Verfahrensschritt wird die Oberfläche zunächst mit einem Haftvermittler, z.B. einer Harzschicht versehen und die so vorbehandelten Polystyrol-Teilchen werden auf unterschiedliche, bekannte Weise mit dem körnigen Granulat in Kontakt gebracht und beschichtet.

Abgestimmt auf das Erfordernis eines offen- oder geschlossenporig zellularen Sinterformkörpers als Endprodukt erfolgt die Beschichtung der auf vorzugsweise 0,5 - 50 mm Durchmesser vorgeschäumten Polystyrol-Teilchen mit einer, die gesamte Oberfläche bedeckenden Schicht, oder aber als nicht die gesamte Teilchenoberfläche bedeckende Schicht, was beispielsweise erreichbar ist, wenn die Polystyrol-Teilchen vor der Beschichtung in einer Formgebungsvorrichtung unter zonenweiser Flächenberührung aneinandergrenzender Teilchen in eine dichte Packung gebracht werden. Erfolgt die Schichtauftragung demnach unter Bewegung der einzelnen Polystyrol-Teilchen, beispielsweise in einem Wirbelbett oder in einem vibrierenden Siebgehäuse, so erhält man auf der Polystyrol-Teilchenoberfläche eine, in sich geschlossene Auftragschicht weitgehend homogener Schichtdicke. Werden indes die Polystyrol-Teilchen, z.B. durch Einrütteln unter zonenweiser Flächenberührung zum Nachbarteilchen als dichte Packung in eine Formgebungsvorrichtung eingebracht und wird die in Form gebrachte Packung anschließend mit Schichtmaterial getränkt und beschichtet, so kommt es im Bereich der Polystyrol-Teilchen mit gegenseitigem Flächenkontakt nicht zu einer Beschichtung. Die Auftragschicht des einzelnen Polystyrol-Teilchen weist somit Öffnungen in den Berührungszonen aneinandergrenzender Polystyrol-Teilchen auf. Bei letzterer Verfahrensvariante ist es zweckmäßig, die für die Beschichtung dichtgepackt in eine Form gebrachten Polystyrol-Teilchen in dieser Formgebungsvorrichtung auch nachzuschäumen.
Die Formgebungsvorrichtung ist vorzugsweise eine allseitig geschlossene Form.

Nach einer bevorzugten Ausführung werden kreiszylindrisch vorgeschäumte Polystyrol-Teilchen noch vor dem Beschichten in einer Art "Monolage" bei gleicher Ausrichtung der Zylinderachsen dichtgepackt in eine Formgebungsvorrichtung aneinandergereiht und füllen dabei den durch die Formwände der Formgebungsvorrichtungen begrenzten Raum in den zwei horizontalen Raumrichtungen unter Teilchenberührung aus. Die Formgebungsvorrichtung ist dazu senkrecht, nach oben hin offen. Die Teilprozesse des Beschichtens und des anschließenden Nachschäumens erfolgen ohne einen Wechsel in derselben Formgebungsvorrichtung.

Die spezifische Auswahl von Polyamid als Binder in der Formmassen- bzw. Auftragschicht, in Verbindung mit blähfähigem Polystyrol erlaubt die Durchführung des Nachschäumschrittes bereits bei Temperaturen zwischen 70°C und 120 °C. In der Praxis erfolgt dieser Schritt auf wirtschaftliche Weise durch Einbringen der allseitig geschlossenen, oder aber in einer nur in zwei Raumrichtungen durch die Formwände begrenzten Formgebungsvorrichtung, in ein Bad von kochendem Wasser- oder Wasserdampf. Dabei hat es sich bewährt, die Formwände mit schmalen Schlitzen zu perforieren, dem kochenden Wasser oder Dampf damit unmittelbaren Zutritt zur aufzuschäumenden Masse zu geben und so den Nachschäumvorgang zu beschleunigen. Die Anordnung und Größe der Schlitze ist so zu wählen, dass der Forminhalt beim Nachschäumen nicht in die Schlitze eindringen kann, der Charakter der "geschlossenen" oder "zumindest in zwei Raumrichtungen durch Formwände begrenzten" Formgebungsvorrichtung gegeben ist.
Die niedrige Aufschäumtemperatur schließt jede physikalische oder chemische Zustandsänderung des Matrixwerkstoffes während des Nachschäumens aus, ein großer Vorteil zum Beispiel gegenüber dem bekannten Aufschäumen in einer Metallschmelze.
Beim Nachschäumen in geschlossener Form nehmen die ursprünglich etwa kugelförmigen Polystyrol-Teilchen über entsprechende Volumenvergrößerung und Änderung der Oberflächenform den gesamten verfügbaren Raum innerhalb der Form ein. Dabei expandiert die Auftragschicht aus dem noch ungesinterten Verbundmaterial und wird unter dem wachsenden Druck der nachschäumenden Polystyrol-Teilchen gleichzeitig so verdichtet und zugleich in lückenlos polyedrische Raumform gebracht, dass beim anschließenden Sintern polyedrische, bzw. zumindest in zwei Raumrichtungen polyedrische Zellwände mit dichtem Sintergefüge entstehen. Dank der besonders hoch thermoplastischen Eigenschaften des Polyamids, dies in Verbindung mit bekannten organischen Weichmachern und möglichen sonstigen organischen Zusätzen in der Formmasse, erfolgt dieser Schritt wahlweise ohne, oder bei entsprechender, nachfolgend näher beschriebenen Verfahrensführung, ohne ein unkontrolliertes Aufreißen der Auftragschichten. Die Dicke der Auftragschicht bleibt dank gleichmäßigen plastischen Fließens während der Volumenvergrößerung der nachschäumenden Polystyrol-Teilchen weitgehend homogen.

Bereits weiter vorne ist eine erste Verfahrensvariante zur Ausbildung von Zellstrukturen mit gezielten Durchbrüchen, bzw. Öffnungen in den Zellwänden beschrieben worden.
Nach einem weiteren bevorzugten Verfahren zur Ausgestaltung von Öffnungen, bzw. Durchbrüchen in Zellwänden werden die thermoplastischen Eigenschaften der Binderkomponenten so abgestimmt und das Aufblähen der Polystyrol-Teilchen während des Nachschäumens so lange durchgeführt, bis die Auftragschichten der anfangs öffnungsfrei homogen beschichteten Polystyrol-Teilchen unter dem infolge des expandierenden Polystyrols ansteigenden Druck zwischen benachbarten Polystyrol-Teilchen in den am stärksten unter Druck stehenden Zonen über plastisches Fließen ausdünnen und sich schließlich in diesen Zonen öffnen. Vorzugsweise wird das Verfahren so gesteuert, dass sich die Auftragschicht in 10 - 30 % Flächenanteil der Oberflächen des einzelnen, nachgeschäumten Polystyrol-Teilchens öffnet.

Wie bei vergleichbaren, bereits bekannten Verfahren, lassen sich auch gemäß Erfindung über das Einbringen von einzelnen Lagen verschiedenartig zusammengesetzter Formmassen in die Formgebungsvorrichtung Bereiche mit unterschiedlicher Porenstruktur, oder auch poröse und nicht poröse Zonen innerhalb eines Sinterformkörpers ausbilden.

Das erfindungsgemäße Verfahren erlaubt Ausgestaltungen zum Beispiel der Art, dass der Formmasse als geeignet bekannte, kleinvolumige PlatzhalterTeilchen beigegeben werden, die noch vor dem Sintern wieder aus den Zellwänden entfernt werden und dem fertigen Sinterformkörper eine gewünschte Mikroporosität verleihen. Beispielsweise werden die Wände siebartig mikroporös ausgeführt, um einem Lösungsmittel den für die Lösung der organischen Komponenten notwendigen Eintritt in den geschäumten Formkörper, sowie für den Austritt der gelösten Substanzen zu ermöglichen.

Nach einer weiteren Ausgestaltung des Verfahrens lassen sich in die Formgebungsvorrichtung neben den mit Auftragsschicht versehenen Polystyrol-Teilchen auch unbeschichtete, in der Regel vergleichsweise kleinere und nicht notwendigerweise gleichgeformte Polystyrol-Teilchen als reine Platzhalter einbringen. Das erlaubt die Ausbildung von Varianten der geometrischen Zellstruktur im Sinterformkörper.

In Weiterführung des erfindungsgemäßen Verfahrens werden auf die bereits mit einer Auftragschicht versehenen Polystyrol-Teilchen zusätzlich Trennschichten aufgebracht, um ein Vereinigen zweier, beim Nachschäumen regulär unter Druck flächig zusammenfließender Auftragschichten zu verhindern. So lassen sich beim Nachschäumen in geschlossener Form die oben beschriebenen Vorgänge des erfindungsgemäßen Verdichtens der Formmasse und der polyedrischen Formgebung für die einzelne, aus Poystyrol-Teilchen mit Auftragschicht hervorgehenden Hohlkugel erzielen, ohne dass ein einziger Formkörper aus sämtlichen Hohlkugeln gebildet wird. Vielmehr zerfällt der vorgeformte Körper nach dem Extrahieren der im Lösungsmittel gelösten Binderkomponenten wieder in einzelne Sinterformteilchen. Die einzelnen Hohlkörper bzw. polyedrische Zellkörper weisen eine dichte Sinterstruktur auf.

Das erfinderische Verfahren umfasst den Prozessschritt, wonach auf das Nachschäumen folgend, Polystyrol und organische Komponenten, ausgenommen das Polyamid, bzw. wesentliche Anteile des Polyamids, im nachgeschäumten, nichtgesinterten Formkörper chemisch gelöst und als Lösung aus dem Formkörper ausgebracht werden. Für den Erfolg des erfinderischen, wie auch vergleichbarer bekannter Verfahren wesentlich ist die Ausbringung, ohne dabei die im Formkörper zuvor gebildete geometrische Form und Struktur so weit zu zerstören oder zu beeinträchtigen, dass es nicht zur gewünschten dichten und formstabilen Versinterung der Matrixteilchen zum Sinterformkörper kommt. Im Unterschied zu den bekannten Verfahren, die für den Prozess des Nachschäumens keine, während des Nachschäumens bleibende, in sich geschlossene, mechanisch stabile Körperform bewahren, werden beim vorliegenden Verfahren vorgeschäumte Polystyrol-Teilchen eingesetzt, die aber nach dem Schäumen und Abkühlen der Formkörper auf Raumtemperatur nicht länger eine Stützfunktion übernehmen müssen und somit unmittelbar anschließend und vor dem abschließenden Sintern, vollständig aus dem Formkörper herausgelöst werden können. Das in entsprechenden Lösungsmitteln nicht lösliche Polyamid, in angemessenem Anteil von 5 - 10 Gew.% der gesamten Formmasse zugegeben, übernimmt die weitere Stützfunktion der noch ungesinterten Formkörpers.
Das Polyamid wird schließlich während einer ersten Phase des Sinterprozesses auf einer ersten Temperaturstufe von 450°C - 550°C mittels Pyrolyse verflüchtigt und aus dem Formkörper ausgetragen, dies zu einem Zeitpunkt, wo sich bereits erste Sinterbrücken zwischen den Matrixteilchen gebildet haben, welche die weitere Stützfunktion für den Formkörper bis zur tragfähig, dichten Versinterung bei üblichen metallischen und keramischen Sintertemperaturen von regelmäßig über 1000°C zu mechanisch festen Sinterformkörpern übernehmen.
Für die Erfindung bedeutsam ist, dass die Ausbringung des Polyamids, oder zumindest wesentlicher Anteile hiervon, erst während einer ersten Stufe des Sinterschrittes mittels Pyrolyse und zugleich in einem Stadium, wo bereits erste, stabilisierende Sinterbrücken zwischen den zu versinternden Matrixteilchen gebildet sind. Das erlaubt die Fertigung hochfester Sinterformkörpern mit dichtgesinterten, mechanisch stabilen, dünnen Zellwänden und entsprechend hohem Porenvolumenanteil.

Das erfinderische Verfahren ist nicht auf die Auswahl einzelner metallischer und/oder keramischer Matrixwerkstoffe beschränkt. Die Matrixteilchen mit einem bevorzugten Teilchendurchmesser von 0,001 - 2 mm sind in einen sinterfähigen Zustand zu bringen. Aus der Gruppe der keramischen Matrixtwerkstoffe haben sich anwendungsbedingt SiC, SiN, sowie Oxide des Aluminium, Silizium, Magnesium, Zirkonium und Yttrium besonders bewährt. Bevorzugte metallische Matrixwerkstoffe sind Fe, Co, Ni, Cu, AL, Ti, Ta, Mo, W, Edelmetalle, deren bei der Durchführung des erfinderischen Verfahrens in Metalle überführbare Oxide oder Hydride, sowie Hartmetalle.

Die Erfindung wird anhand des nachfolgenden Verfahrensbeispieles näher beschrieben.

Zur Fertigung eines Sinterformkörpers aus einer Chrom-Nickellegierung mit wabenartiger, geschlossener Zellstruktur und hohem Poren- zu Festmaterial Volumenverhältnis wird wasserverdüstes Chromnickel-Matrixpulver (Sorte 316 L der Fa. Pamco; Teilchengröße: 90 Vol.% kleiner 15µm) in einem Knetaggregat mit Binderkomponenten geknetet und gemischt. 93 Gew.% Matrixpulver werden mit 6,5 Gew.% Binderkomponenten (überwiegend Polyamid mit kleinen Anteilen an Weichmachern, sowie Netz- und Trennmitteln) bei ca. 100°C geknetet, bis die so gebildete Formmasse als niedrigviskose Schmelze vorliegt. Die aus dem Aggregat ausgetragene Formmasse wird abgekühlt und dabei verfestigt und zu einem Pulver einer Teilchengröße von kleiner 0,2 mm zerkleinert, bzw. granuliert.
Dann werden 500 ml vorgeschäumte, etwa kugelförmige Polystyrol-Teilchen homogener Größe von etwa 6,5 mm Durchmesser in einem Mischer zunächst mit 10 g einer ethanolischen Harzlösung beschichtet und mit diesem Haftvermittler versehen in einem Pulverbett aus Formmassen Granulat gewälzt und mit diesem gleichmäßig beschichtet. In einem Siebgewebe werden das nicht als Schicht haftende Formmassen Granulat abgetrennt und die beschichteten Polystyrol-Teilchen werden bei 40°C getrocknet, ggf. auch in einer geschlossenen Vakuumkammer vom flüssigen Ethanol befreit. Ihr Schüttgewicht beträgt danach 225 g/Liter.
Die beschichteten Kugeln werden dann in einen, auf einer Bodenplatte liegenden Rahmen von 60 x 60 mm² Weite und mit 25 mm hohen, massiven Formwänden in dichter Packung lagenweise eingebracht. Der Rahmen wird anschließend beiderseits mit einer mit Schlitzen oder Löchern versehenen Lochplatte abgedeckt und druckfest verschlossen, wobei zwischen Lochplatte und Formmasse ein Siebgewebe und Filterpapier als Trennmittel eingelegt werden.
Die gefüllte und geschlossene Form wird für 3 Minuten bei 0,6 bar Überdruck und bei 120°C in einem Dampfautoklaven gelagert, dem Autoklaven entnommen und auf etwa Raumtemperatur abgekühlt. Der Formkörper aus aufgeschäumter Formmasse wird der Form entnommen, von anhaftendem Filterpapier befreit und bei 60°C für ca. 3 Stunden getrocknet, um die etwa 3 Gew.%, während des Nachschäumens aufgenommene Feuchtigkeit wieder zu entfernen. Der so erhaltene Formkörper besitzt ein Raumgewicht von 250 g/Liter.
Er wird für das weitere Verfahren in einen Käfig mit für Flüssigkeit durchlässigen Siebboden gegeben und für 24 Stunden einer 50°C warmen Flüssigkeit aus Ethylacetat ruhend ausgesetzt. Die Flüssigkeit dringt in den Formkörper ein und löst das Polystyrol sowie die Binderkomponenten heraus, ausgenommen das Polyamid.

Der mit Lösungsflüssigkeit getränkte Formkörper wird bei 40°C unter Vakuum während 3 Stunden getrocknet und dann einem zweistufigen Sinterprozess unterzogen. Bei einer ersten Temperaturstufe von 400°C - 500°C wird das Polyamid mittels Pyrolyse als flüchtige Komponente aus dem Formkörper mit ersten Sinterbrücken zwischen den Matrixpulver-Teilchen entfernt. Daran anschließend erfolgt das Dichtsintern des Matrixpulvers bei 1320°C und 90 Minuten Sinterdauer zum mechanisch festen Sinterformkörper mit polyedrischer Zellenstruktur. Sein Raumgewicht von 400 g/Liter entspricht einem Porenvolumenanteil von 95 % im Sinterkörper.

## Patentansprüche

1. Verfahren zur Herstellung eines zellularen Sinterformkörpers mit den Fertigungsschritten, Auftragen einer Schicht aus, Keramik- u/o Metall-Matrixpulver, sowie organische Komponenten enthaltendem Schichtmaterial auf treibmittelhaltige, vorgeschäumte Polystyrol-Teilchen, Nachschäumen der beschichteten Polystyrol-Teilchen in einer Formgebungsvorrichtung, Entfernen von Polystyrol und organischen Komponenten aus dem so gebildeten Formkörper und Sintern des Matrixpulvers,
**dadurch gekennzeichnet,**
**dass** als organische Komponenten ein Verbundmaterial aus Polyamid und organischem Weichmacher vorbestimmter Viskositätscharakteristik, wahlweise mit geringen Zusätzen verwendet wird, dass das Verbundmaterial in knetbarem Zustand mit dem Keramik- u/o Metall-Matrixpulver gemischt, die Mischung geformt, in festen Zustand überführt, granuliert und das thermoplastische Granulat, vor oder nach dem Einfüllen der Polystyrol-Teilchen in eine zumindest in zwei Raumrichtungen durch Formwände begrenzte Formgebungsvorrichtung, als haftfähige Schicht auf die Polystyrol-Teilchen aufgebracht wird, dass die mit Schicht versehenen Polystyrol-Teilchen zum Nachschäumen so lange auf einer erhöhten Temperatur von 70°C - 130°C gehalten werden, bis die nachgeschäumten Teilchen samt plastisch expandierter Schicht die Formgebungsvorrichtung in den durch die Formwände begrenzten Raumrichtungen lückenlos ausfüllen und dabei eine polyedrische Zellform einnehmen und dass das Polystyrol und die organischen Komponenten und Zusätze, ausgenommen das Polyamid, vor dem Sintern, das Polyamid aber zumindest überwiegend beim Prozessschritt des Matrixpulver-Sinterns über Pyrolyse aus dem Formkörper entfernt werden.

2. Verfahren nach Anspruch 1, **dadurch gekennzeichnet, dass** die vor dem Einfüllen in die Formgebungsvorrichtung beschichteten Polystyrol-Teilchen solange nachgeschäumt werden, bis sich die zunächst geschlossenen Auftragschichten unter dem ansteigenden Druck zwischen benachbarten Polystyrol-Teilchen in den am stärksten unter Druck stehenden Oberflächenzonen infolge plastischer Schichtverdrängung öffnen.

3. Verfahren nach Anspruch 2, **dadurch gekennzeichnet, dass** die Auftragsschichten aus 10 - 30 % Anteil der Teilchenoberfläche entfernt werden.

4. Verfahren nach Anspruch 1, **dadurch gekennzeichnet, dass** die unbeschichteten Polystyrol-Teilchen mittels Einrütteln unter zonenweiser Flächenberührung zum Nachbarteilchen als dichte Packung in die Formgebungsvorrichtung eingebracht und die in Form gebrachte Packung anschließend mit dem Schichtmaterial getränkt oder mit Schichtpulver behaftet und dabei beschichtet wird.

5. Verfahren nach Anspruch 1 bis 4, **dadurch gekennzeichnet, dass** solche, in Zylinderform vorgeschäumte Polystyrol-Teilchen verwendet werden.

6. Verfahren nach Anspruch 1 bis 5, **dadurch gekennzeichnet, dass** vor dem Sintern nicht entfernte Reste von Polystyrol und/oder organischen Komponenten während des Prozessschrittes Sintern mittels Pyrolyse entfernt werden.

7. Verfahren nach Anspruch 1 bis 6, **dadurch gekennzeichnet, dass** den organischen Komponenten als Zusatz eine organische Fettsäure beigegeben wird.

8. Verfahren nach Anspruch 1 bis 7, **dadurch gekennzeichnet, dass** das Nachschäumen durch Einbringen der gefüllten Formgebungsvorrichtung in ein Bad kochenden Wassers erfolgt.

9. Verfahren nach Anspruch 1 bis 8, **dadurch gekennzeichnet, dass** kugelförmig vorgeschäumte Polystyrol-Teilchen mit Durchmesser 0,5 - 50 mm verwendet werden.

10. Verfahren nach Anspruch 1 bis 9, **dadurch gekennzeichnet, dass** Formmassen Granulat mit Durchmesser 0,01 - 2 mm verwendet wird.

11. Verfahren nach Anspruch 1 bis 10, **dadurch gekennzeichnet, dass** Keramik- u/o Metall-Matrixpulver mit Durchmesser 0,001 - 2 mm verwendet wird.

12. Verfahren nach Anspruch 1 bis 11, **dadurch gekennzeichnet, dass** Keramikpulver aus der Gruppe SiC, SiN u/o Oxiden des Aluminium, Silizium, Magnesium, Zirkonium und Yttrium verwendet wird.

13. Verfahren nach Anspruch 1 bis 12, **dadurch gekennzeichnet, dass** Metallpulver aus der Gruppe Fe, Co, Ni, Cu, Al, Ti, Ta, Mo, W, Edelmetalle, deren bei Durchführung des Verfahrens in Metalle umsetzbare Oxide oder Hydride sowie Hartmetall verwendet wird.

## Claims

1. Process for producing a cellular sintered shaped article comprising the fabricating steps of coating prefoamed polystyrene particles comprising a blowing agent with a layer of material comprising ceramic and/or metal matrix powder and also comprising organic components, afterfoaming the coated polystyrene particles in a shape-conferring apparatus, removing polystyrene and organic components from the shaped article thus formed, and sintering the matrix powder,
**characterized in that**
the organic components comprise a composite material of polyamide and organic plasticizer of predetermined viscosity characteristics, selectively with small admixtures; the composite material is mixed in a kneadable state with the ceramic and/or metal matrix powder, the mixture is shaped, converted into a solid state, granulated and the thermoplastic granulate, before or after the filling of the polystyrene particles into a shape-conferring apparatus bounded by mould walls in two spatial directions at least, is applied to the polystyrene particles as an adhesion-capable layer; the layer-provided polystyrene particles are maintained for afterfoaming at an elevated temperature of 70°C-130°C until the afterfoamed particles including plastically expanded layer gaplessly fill out the shape-conferring apparatus in the spatial directions bounded by the mould walls and take on a polyhedral cellular shape; and the polystyrene and the organic components and admixtures, except the polyamide, are removed from the shaped article before sintering, but the polyamide is removed from the shaped article at least predominantly during the operating step of matrix powder sintering, via pyrolysis.

2. Process according to Claim 1, **characterized in that** the polystyrene particles coated before the filling into the shape-conferring apparatus are afterfoamed until the initially closed coating layers open through plastic displacement of layer under the rising pressure between adjacent polystyrene particles in the most severely pressurized surface zones.

3. Process according to Claim 2, **characterized in that** the coating layers are removed from 10-30% of the particle surface.

4. Process according to Claim 1, **characterized in that** the uncoated polystyrene particles are riddled into the shape-conferring apparatus as a close packing with zonewise areal contact with the adjacent particle and the introduced packing in the mould is subsequently coated by being drenched with the layer material or adhered with layer powder.

5. Process according to Claim 1 to 4, **characterized in that** such polystyrene particles prefoamed in a cylindrical shape are used.

6. Process according to Claim 1 to 5, **characterized in that** residues of polystyrene and/or organic components not removed before sintering are removed by pyrolysis during the operating step of sintering.

7. Process according to Claim 1 to 6, **characterized in that** an organic fatty acid is admixed to the organic components.

8. Process according to Claim 1 to 7, **characterized in that** the afterfoaming is effected by introducing the filled shape-conferring apparatus into a bath of boiling water.

9. Process according to Claim 1 to 8, **characterized in that** polystyrene particles prefoamed to a spherical shape with diameter 0.5-50 mm are used.

10. Process according to Claim 1 to 9, **characterized in that** moulding material granulate of diameter 0.01-2 mm is used.

11. Process according to Claim 1 to 10, **characterized in that** ceramic and/or metal matrix powder of diameter 0.001-2 mm is used.

12. Process according to Claim 1 to 11, **characterized in that** ceramic powder is selected from the group consisting of SiC, SiN and/or oxides of aluminium, silicon, magnesium, zirconium and yttrium.

13. Process according to Claim 1 to 12, **characterized in that** metal powder is selected from the group consisting of Fe, Co, Ni, Cu, Al, Ti, Ta, Mo, W, noble metals, their oxides or hydrides convertible into metals in the course of practice of the process, and cemented carbide.

## Revendications

1. Procédé pour la production d'un corps façonné fritté cellulaire présentant les étapes de fabrication application d'une couche en matériau en couche contenant de la poudre formant la matrice à base de céramique et/ou de métal ainsi que des composants organiques, sur des particules en polystyrène contenant un agent gonflant, prémoussées, post-moussage des particules de polystyrène revêtues dans un dispositif de façonnage, élimination du polystyrène et des composants organiques du corps façonné ainsi formé et frittage de la poudre formant la matrice, **caractérisé en ce qu'**on utilise comme composants organiques un matériau composite en polyamide et en plastifiant organique présentant une caractéristique de viscosité prédéfinie, au choix avec des faibles additifs, que le matériau composite est mélangé à l'état malaxable avec la poudre formant la matrice à base de céramique et/ou de métal, le mélange est façonné, transformé à l'état solide, granulé et le granulat thermoplastique est appliqué, avant ou après l'introduction des particules de polystyrène dans un dispositif de façonnage délimité dans au moins deux directions dans l'espace par des parois de moule, comme couche adhésive sur les particules de polystyrène, que les particules de polystyrène pourvues de la couche sont maintenues, en vue du post-moussage, à une température élevée de 70°C-130°C pendant un laps de temps tel que les particules post-moussées avec la couche plastiquement expansée remplissent sans vide le dispositif de façonnage dans les directions dans l'espace délimitées par les parois de moule en prenant une forme de cellule polyédrique et que le polystyrène et les composants organiques et les additifs, à l'exception du polyamide, sont éliminés avant le frittage, le polyamide étant éliminé, du moins essentiellement, lors de l'étape de procédé du frittage de la poudre formant la matrice par pyrolyse du corps façonné.

2. Procédé selon la revendication 1, **caractérisé en ce que** les particules de polystyrène revêtues avant le remplissage dans le dispositif de façonnage sont post-moussées pendant un laps de temps tel que les couches appliquées qui sont fermées au départ s'ouvrent sous l'effet de la pression croissante entre les particules de polystyrène adjacentes dans les zones de surface se trouvant le plus fortement sous pression suite au refoulement plastique des couches.

3. Procédé selon la revendication 2, **caractérisé en ce que** les couches appliquées sont éliminées en une proportion de 10-30% de la surface des particules.

4. Procédé selon la revendication 1, **caractérisé en ce que** les particules de polystyrène non revêtues sont introduites sous l'effet de vibrations avec un contact superficiel par zones avec les particules voisines comme garniture compacte dans le dispositif de façonnage et la garniture moulée est ensuite imbibée avec le matériau formant la couche ou pourvue de poudre formant la couche et revêtue.

5. Procédé selon la revendication 1 à 4,
**caractérisé en ce qu'**on utilise des particules de polystyrène prémoussées sous forme cylindrique.

6. Procédé selon la revendication 1 à 5, **caractérisé en ce que** des restes de polystyrène et/ou de composants organiques non éliminés avant le frittage sont éliminés par pyrolyse pendant l'étape de procédé du frittage.

7. Procédé selon la revendication 1 à 6, **caractérisé en ce que** les composants organiques sont additionnés d'un acide gras organique en tant qu'additif.

8. Procédé selon la revendication 1 à 7, **caractérisé en ce que** le post-moussage est réalisé par introduction du dispositif de façonnage rempli dans un bain d'eau en ébullition.

9. Procédé selon la revendication 1 à 8, **caractérisé en ce qu'**on utilise des particules de polystyrène prémoussées en forme de bille présentant un diamètre de 0,5-50 mm.

10. Procédé selon la revendication 1 à 9, **caractérisé en ce qu'**on utilise comme masses de moulage un granulat présentant un diamètre de 0,01-2 mm.

11. Procédé selon la revendication 1 à 10, **caractérisé en ce qu'**on utilise une poudre formant la matrice à base de céramique et/ou de métal présentant un diamètre de 0,001-2 mm.

12. Procédé selon la revendication 1 à 11, **caractérisé en ce qu'**on utilise de la poudre de céramique choisie dans le groupe formé par SiC, SiN et/ou les oxydes d'aluminium, de silicium, de magnésium, de zirconium et d'yttrium.

13. Procédé selon la revendication 1 à 12, **caractérisé en ce qu'**on utilise de la poudre de métal du groupe formé par Fe, Co, Ni, Cu, Al, Ti, Ta, Mo, W, les métaux nobles, leurs oxydes ou hydrures pouvant être transformés en métaux pendant la réalisation du procédé ainsi que du métal dur.
